(19) Europäisches Patentamt
European Patent Office
Office européen des brevets

(11) **EP 2 376 812 B1**

(12) **FASCICULE DE BREVET EUROPEEN**

(45) Date de publication et mention
de la délivrance du brevet:
**12.06.2013 Bulletin 2013/24**

(21) Numéro de dépôt: **09803828.4**

(22) Date de dépôt: **10.12.2009**

(51) Int Cl.:
**F16H 61/02** *(2006.01)*     **F16H 59/40** *(2006.01)*
**F16H 59/48** *(2006.01)*     **F16H 59/14** *(2006.01)*
**F16H 59/52** *(2006.01)*     **F16H 59/56** *(2006.01)*

(86) Numéro de dépôt international:
**PCT/FR2009/052471**

(87) Numéro de publication internationale:
**WO 2010/079275 (15.07.2010 Gazette 2010/28)**

(54) **PROCEDE D'ANTICIPATION DES RETROGRADAGES ET DE CONTROLE D'UNE TRANSMISSION AUTOMATIQUE**

VERFAHREN ZUM ANTIZIPIEREN VON HERUNTERSCHALTEN UND ZUR ÜBERWACHUNG EINES AUTOMATISCHEN GETRIEBES

METHOD FOR ANTICIPATING DOWNSHIFTING AND FOR MONITORING AN AUTOMATIC TRANSMISSION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **12.01.2009 FR 0950133**

(43) Date de publication de la demande:
**19.10.2011 Bulletin 2011/42**

(73) Titulaire: **Renault s.a.s.**
**92100 Boulogne-Billancourt (FR)**

(72) Inventeur: **VANDEKERKHOVE, Rémi**
**F-75012 Paris (FR)**

(56) Documents cités:
**WO-A-2006/074760     DE-A1-102004 002 813**
**US-A- 5 672 139     US-A- 6 123 644**

EP 2 376 812 B1

Printed by Jouve, 75001 PARIS (FR)

## Description

La présente invention concerne le contrôle d'une transmission automatique, et notamment celui des rétrogradages en montée, sur un véhicule équipé d'une transmission automatique disposant de lois de passage qui lui imposent déjà des passages sur le rapport inférieur, en fonction de courbes de rétrogradage préétablies.

Lorsqu'un véhicule équipé d'une transmission automatique roule en montée, la transmission adapte son fonctionnement, afin de fournir plus de réserve de couple au conducteur. De manière classique, la transmission estime le pourcentage de pente, et applique une loi de passage de rapports adaptée à la pente : en montée les changements de rapports s'effectuent ainsi à plus haut régime.

Cependant, la mise au point des lois de passage adaptées aux différents profils de route, est une opération complexe.

Pour cette raison, la publication FR 2 842 579 propose une autre méthode pour adapter le fonctionnement d'une transmission automatique en montée. Cette méthode se fonde sur l'estimation de l'accélération que le véhicule peut potentiellement atteindre après un passage montant. Une telle estimation permet de décider de l'opportunité d'effectuer ou non ce passage montant, s'il est demandé par la loi de passage appliquée dans la transmission.

Selon cette publication, l'accélération atteignable après le changement de rapport est calculée en fonction de l'accélération actuelle, du couple moteur actuel, et de la différence de couple prévue avant/après le passage. Le passage montant n'est alors autorisé que si l'accélération potentiellement atteignable après le changement de rapport, est supérieure à un seuil, dit de confort.

Les deux principaux inconvénients de cette méthode, sont d'une part les faiblesses de l'estimation d'accélération atteignable après un passage montant, et d'autre part le fait que seuls les changements de rapport montants s'adaptent à la pente. En effet, les rétrogradages sont fondés, soit sur la loi de passage, soit sur un critère de perte de vitesse en levé de pied, qui est difficile à appliquer.

La présente invention vise à améliorer l'estimation de l'accélération dans une méthode d'anticipation des passages.

Elle propose notamment une méthode d'adaptation automatique des rétrogradages à la pente, qui permet de s'affranchir de la mise au point de lois adaptées à la montée.

Dans ce but, elle prévoit que le passage sur le rapport inférieur soit imposé à la transmission indépendamment de la consigne de rapport établie par les lois de passage, lorsque l'accélération atteignable au couple maximal sur le rapport courant est inférieure au seuil d'accélération nécessaire au maintien de la vitesse du véhicule.

De préférence, l'accélération atteignable est estimée par calcul de la différence entre le couple à la roue correspondant au couple moteur maximal atteignable sur le rapport courant lors d'une demande de relance par enfoncement de la pédale d'une part, et le couple appliqué à la roue correspondant au couple moteur courant d'autre part.

L'invention propose aussi un procédé de contrôle des changements de rapports sur une transmission automatique disposant de lois de passage imposant une consigne de rapport selon des lois de passage pré établies, où les rétrogradages sont déclenchés à la fois par application des lois de passage de la transmission, et par anticipation.

La présente invention sera mieux comprise à la lecture de la description suivante d'un mode de réalisation non limitatif de celle-ci, en se reportant aux dessins annexés sur lesquels :

- la figure 1 montre un exemple de courbe de rétrogradage d'une loi de passage
- la figure 2 est une illustration schématique du temps de réponse d'un moteur suralimenté,
- la figure 3 est un l'algorithme de contrôle des passages de la transmission automatique, et
- la figure 4 est une illustration schématique de la réponse en couple d'un moteur suralimenté lors d'une demande de relance en montée.

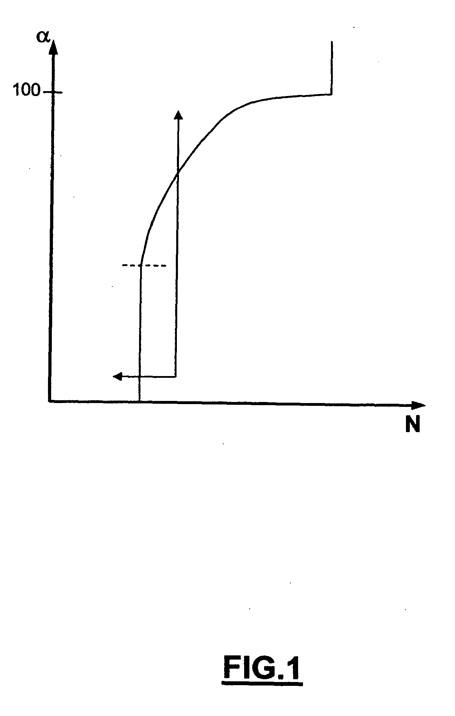

La courbe de rétrogradage dans un plan N, $\alpha$ (N régime moteur en tours par minute, et $\alpha$ angle d'enfoncement pédale en pourcentage), reproduite à titre d'exemple sur la figure 1, peut se décomposer en deux parties. Une partie basse verticale dite « pied de loi », et une partie courbe supérieure dite « coeur de loi ». Le franchissement de cette courbe provoque un rétrogradage. Il peut s'effectuer de deux façons. Suite à une décélération, lorsque le conducteur a le pied levé, la courbe est franchie dans sa partie basse. Sur un enfoncement de la pédale d'accélération, c'est-à-dire une demande de relance de la part du conducteur, la courbe est franchie dans sa partie haute.

Le « coeur de loi » est généralement positionné au-delà de l'atteinte du couple maximum. En effet, lors d'une demande d'accélération du conducteur par appui sur sa pédale, le moteur atteint son couple maximum avant un éventuel rétrogradage, pour augmenter la puissance disponible.

Ainsi, lorsque le véhicule est en décélération pied levé, et que le régime approche du régime de rétrogradage, si le conducteur accélère, il atteint normalement le couple maximal du moteur disponible à ce régime, avant de croiser le coeur de loi. S'il continue d'enfoncer la pédale, il déclenche un rétrogradage.

Mais si le conducteur se contente d'enfoncer la pédale au niveau de l'atteinte du couple max, il faut garantir que ce couple lui suffira au moins à maintenir la vitesse du véhicule.

Le « pied de loi » de rétrogradage est donc positionné en principe à suffisamment haut régime pour garantir que l'accélération au couple moteur max atteignable à ce régime soit suffisant pour avoir une accélération positive sur la pente gravie par le véhicule.

Dans le procédé connu de la publication FR 2 842 579, seuls les changements de rapport montants s'adaptent à la pente, tandis que les rétrogradages sont fondés, soit sur la loi de passage, soit sur un critère de perte de vitesse en levé de pied. Or ce critère n'est pas plus facile à mettre au point qu'une la loi de passage, et ne constitue pas une adaptation fiable à la pente.

Le procédé d'anticipation des rétrogradages proposé, permet d'automatiser le respect de ce critère par le calcul de l'accélération atteignable au couple maximum au régime courant sur la pente rencontrée.

Selon ce procédé, le passage sur le rapport inférieur (R-1) est imposé la transmission indépendamment de la consigne de rapport établie par les lois de passage, lorsque l'accélération atteignable au couple maximal $a_{est}$ (Cm_max) sur le rapport courant (R) est inférieure au seuil d'accélération nécessaire au maintien de la vitesse du véhicule.

Ceci nécessite de calculer l'accélération atteignable au couple max, au régime et à la pente courants (accélération atteignable sur demande de relance), et d'avoir un algorithme pour forcer un rétrogradage, lorsque cette accélération est trop faible.

Le procédé d'anticipation de rétrogradages proposé peut donc s'intégrer dans un procédé de contrôle global de transmission automatique, où les rétrogradages sont déclenchés, soit par application des lois de passage de la transmission, soit par anticipation.

Le calcul de l'accélération atteignable sur demande de relance, au régime moteur et à la pente courante peut être estimée à partir du calcul de la différence entre le couple à la roue correspondant au couple moteur maximal $C_r$ ($C_{m\_max}$) atteignable sur le rapport courant lors d'une demande de relance par enfoncement de la pédale, et le couple appliqué à la roue correspondant au couple moteur courant $C_r(C_m)$.

Dans ce cas, le calcul peut s'effectuer à l'aide d'une relation du type :

$$a_{est}(C_{m\_max}) = a_{mes} + \frac{1}{M} \frac{C_r(C_{m\_max}) - C_r(C_m)}{r},$$

où :

- $a_{est}$ ($C_{m-max}$) est l'accélération atteignable au couple moteur maximal,
- $a_{mes}$ est l'accélération mesurée, obtenue par dérivation de la vitesse véhicule, elle-même fournie au calculateur de gestion de la boite, par exemple par le calculateur de l'ABS via le réseau multiplexé,
- $M$ est la masse du véhicule, estimée par exemple par un procédé d'estimation de masse, tel que décrit dans la publication FR 2 737 761.
- $C_r$ ($C_{n\_max}$) est le couple à la roue correspondant au couple moteur maximal,
- $C_r$ ($C_m$) est le couple à la roue correspondant au couple moteur courant, et
- $r$ est le rayon des pneus, constante qui peut être calibrée.

Le couple à la roue correspondant au couple moteur courant, peut être obtenu par une relation du type :

$$C_r(C_m) = C_m \times K(R),$$

dans laquelle :

- $C_m$ est le couple moteur, estimé par le calculateur de gestion du moteur, et transmis au calculateur de gestion de la boite via le réseau multiplexé, et
- $K(R)$ est le rapport de démultiplication de la transmission sur le rapport $R$, donné par une cartographie contenue dans le calculateur de gestion de la transmission automatique.

Le couple maximal à la roue $C_r$ ($C_{m\_max}$) n'est cependant pas identique au couple moteur maximal $C_{m\_max}$ ($N_m$) . Ils sont liés par un facteur de correction, selon la relation :

$$C_r(C_{m\_max}) = F_{corr} \times C_{m\_max}(N_m) \times K(R) ,$$

où

$N_m$ est le régime moteur, $C_{m\_max}(N_m)$ est le couple moteur maximal théorique calculé en fonction du régime moteur au moyen d'une cartographie contenue dans le calculateur de gestion de la transmission automatique, et K(R) est un coefficient nécessaire pour la correction, et K(R) est le rapport de démultiplication.

Le facteur de correction $F_{corr}$ est un facteur de correction à appliquer au couple moteur max théorique, égal au couple moteur réel divisé par le couple moteur théorique. Ce couple moteur théorique est estimé par le calculateur de gestion de la transmission, au moyen d'une cartographie fonction du régime moteur, et de l'angle pédale.

$F_{corr}$ peut être estimé en fonction du couple moteur $C_m$, estimé par le calculateur de gestion du moteur et transmis au calculateur de gestion de la boite par le réseau multiplexé, et de la consigne de couple appliquée par le moteur $C_{m\_consigne}$.

La consigne de couple $C_{m\_consigne}$ est issue d'un algorithme interne au calculateur de gestion du moteur prenant en compte l'angle pédale et le régime moteur, et peut être transmise au calculateur de gestion de la boîte par le réseau multiplexé du véhicule.

Cependant, côté calculateur moteur, l'algorithme de calcul du couple de consigne est plus complexe qu'une simple cartographie. De plus, la mise au point de la cartographie de couple dans le calculateur de gestion de la transmission peut différer de la mise au point de l'algorithme dans le calculateur de gestion du moteur, en particulier lorsque le moteur se trouve en phase de mise au point. En conséquence, le couple moteur théorique calculé par la transmission est souvent significativement différent du couple de consigne réellement appliqué par le moteur.

En l'absence de disposition particulière, le facteur correctif $F_{corr}$ (dont le rôle est de rendre compte de tous les facteurs de perte de performance qui amènent le couple moteur réel à être inférieur au couple théorique : altitude, filtre à particules chargé, etc.), serait donc faussé.

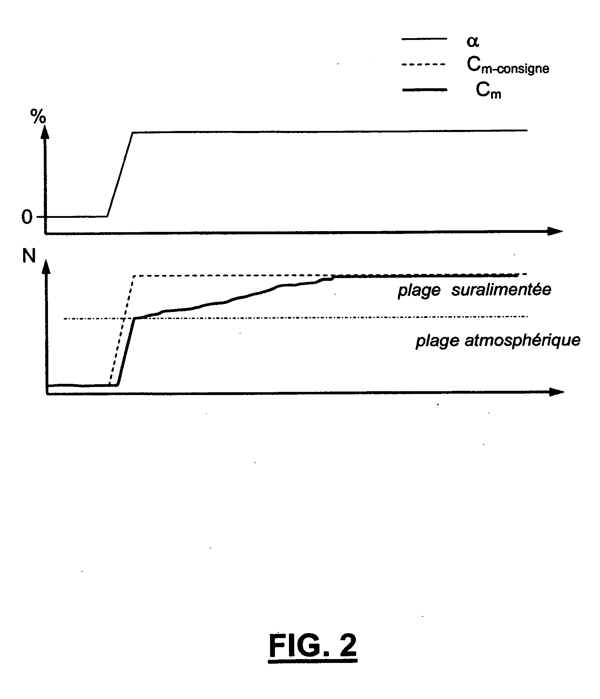

Dans le cas particulier d'un moteur suralimenté, le facteur de perte de couple prépondérant à bas régime, est le long temps de réponse de la suralimentation. Le phénomène est le suivant. La figure 2 montre que, lors d'un enfoncement complet de la pédale d'accélérateur (angle d'enfoncement $\alpha$) par le conducteur, le couple du moteur $C_m$ augmente tout d'abord très rapidement tant qu'il évolue dans la plage atmosphérique PA, puis de manière beaucoup plus lente lorsqu'il atteint la plage suralimentée PS.

Pour s'affranchir temps de retard du turboréacteur à la demande de relance du conducteur, l'invention propose de retenir une moyenne temporelle des valeurs du ratio $\dfrac{C_m}{C_{m\_consigne}}$.

Le facteur de correction $F_{corr}$ est alors :

$$F_{corr} = moyenne\_temporelle\left[\frac{C_m}{C_{m\_consigne}}\right]$$

Cette moyenne temporelle est obtenue de préférence par un filtrage classique du premier ordre, avec une longue constante de temps réglable.

Si $y(T)$ est la sortie du filtre passe bas exprimée à l'instant Tt, $y(T-1)$ est la sortie du filtre passe bas exprimée à l'instant T-1, c'est-à-dire au pas de calcul précédent, et $x(T)$ est l'entrée du filtre passe bas exprimée à l'instant T, ces variables sont liées par une relation du type : **y(T) = K*x(T)+(1-K)*y(T-1)** où $K$ représente le gain du filtre.

Ce gain est lié à la période de calcul du filtre temps séparant les instants T et T-1 « *SampleTime* », et à la constante de temps du filtre passe bas *Tau* par la relation K =1- **exp(-SampleTime/Tau)**

Cependant *le* calcul de la moyenne temporelle $\dfrac{C_m}{C_{m\_consigne}}$ n'est activé que si le couple de consigne appliqué par le moteur est supérieur à un seuil fixe, représentatif de la limite de la plage atmosphérique du moteur.

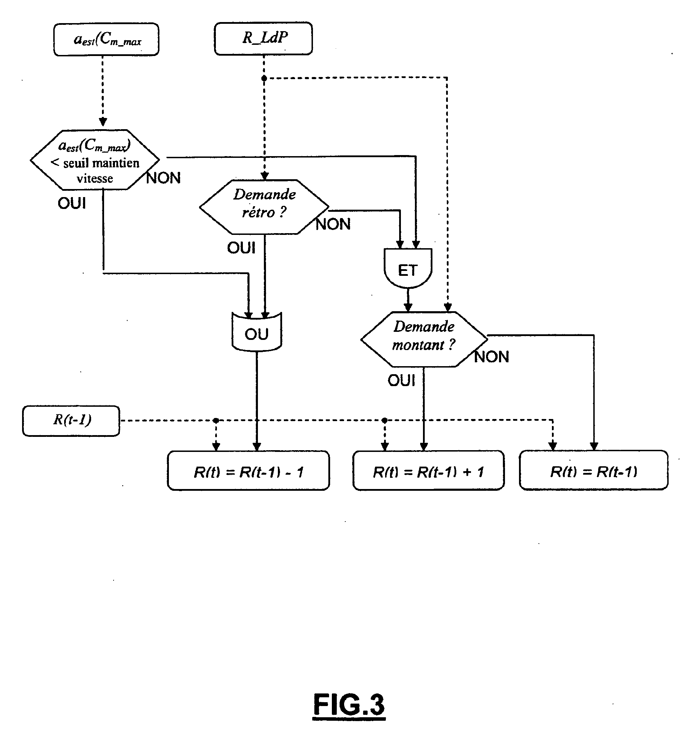

L'anticipation des rétrogradages proposée peut ainsi être mise en oeuvre selon le principe de la figure 3. Tout d'abord l'accélération atteignable au couple maximal est comparée au seuil d'accélération nécessaire au maintien de la vitesse (environ 0 m/s², constante calibrable). Si l'accélération est inférieure à ce seuil, un rétrogradage est demandé.

Concrètement, le rapport de consigne de la transmission à l'instant t, sera égal au rapport de consigne de l'instant précédent moins 1.

En parallèle, le rapport de consigne en sortie des lois de passage est évalué. Si la consigne en sortie de lois est une demande de rétrogradage, ce rétrogradage est effectué.

Si aucun rétrogradage n'est demandé, ni par les lois, ni par l'évaluation de l'accélération atteignable au couple max, le rapport de consigne en sortie des lois de passage est de nouveau évalué, afin de voir si un passage montant est demandé, auquel cas la demande de passage est transmise par incrémentation du rapport de consigne final.

Enfin, si aucun montant n'est demandé, le rapport de consigne final reste inchangé.

Il est également possible de contrôler en fonction de la pente, non seulement les rétrogradages, mais également les passages montants. Comme précédemment, la pente (qui est prise en compte dans le calcul de la masse M), intervient alors dans le calcul de l'accélération estimée sur le rapport supérieur $a_{est}$ (R+1). L'invention prévoit de calculer l'accélération sur le rapport immédiatement supérieur, de façon analogue à l'accélération atteignable sur le rapport inférieur, par une relation telle que :

$$a_{est}(R+1) = a_{mes} + \frac{1}{M}\frac{C_r(R+1) - C_r(R)}{r} \quad ,$$

où

$a_{ms}$ est l'accélération mesurée, obtenue par dérivation de la vitesse véhicule elle-même fournie par exemple par le calculateur de l'ABS, M est masse du véhicule, Cr(R+1) : couple à la roue sur le rapport supérieur, Cr(R) est le couple à la roue sur le rapport courant, et r est le rayon des pneus.

Comme précédemment, le couple à la roue sur le rapport courant est obtenu par une relation du type $C_r(R) = C_m \times K(R)$, où $C_m$ est le couple moteur, estimé par le calculateur de gestion du moteur, et K(R) est le rapport de démultiplication de la transmission sur le rapport R, donné par une cartographie contenue dans le calculateur de gestion de la transmission automatique.

Le couple à la roue sur le rapport supérieur peut alors être estimé par la relation :

$$C_r(R+1) = \left[\frac{C_m}{C_{m\_calculé}[N_m, AP]}\right] \times C_{m\_calculé}[N_m(R+1), AP] \times K(R+1)$$

Dans cette expression, $C_{m\_calcul}$ est le couple moteur théorique calculé en fonction du régime moteur et de l'angle de la pédale d'accélérateur au moyen d'une cartographie, $N_m$ est le régime moteur, est l'angle de la pédale d'accélérateur. Enfin, $N_m$ (R+1), qui est le régime que le moteur atteindra après le passage au rapport supérieur, peut être estimé par la relation $N_m(R+1) = \frac{K(R+1)}{K(R)} \times N_m$ .

Ces calculs permettent de mettre en oeuvre la stratégie suivante. Lorsque l'accélération atteignable sur le rapport supérieur est inférieure à un premier seuil calibrable, et que la pente est supérieure à un deuxième seuil calibrable, alors les passages montants sont interdits. Ils redeviennent autorisés si l'accélération atteignable sur le rapport supérieur devient supérieure à un seuil plus grand que le premier seuil d'accélération, où si la pente devient inférieure à un seuil inférieur au premier seuil de pente.

L'algorithme de la figure 3 est ainsi applicable comme une stratégie complète de contrôle des changements de rapports d'une transmission automatique disposant de lois de passage imposant une consigne de rapport (R) selon des lois de passage pré établies. Selon ce procédé, les rétrogradages sont déclenchés d'une part par application des lois de passage de la transmission, et d'autre part par anticipation.

Ainsi, grâce à l'invention, les rétrogradages, ainsi que les passages montants sur le rapport immédiatement supérieur, peuvent être déclenchés par anticipation conformément aux dispositions proposées.

L'invention présente de nombreux avantages. Parmi ceux-ci, il faut noter que l'accélération prise en compte pour déclencher ou non le passage anticipé, est toujours déterminée par calcul d'une différence de couple entre le couple moteur courant, et le couple atteignable. Toutefois, le couple atteignable n'est plus celui qui serait atteint après le passage anticipé, mais le couple qui sera atteint sur le rapport courant, suite à la demande de relance.

Par ailleurs, l'accélération atteignable prend en compte la pente de la route, aussi bien pour l'anticipation des passages montants, que pour celle des rétrogradages. Ainsi, le procédé d'anticipation proposé par l'invention, permet d'adapter automatiquement l'anticipation des rétrogradages et des passages montants, à la pente de la route.

Le remplacement du couple moteur calculé $\boldsymbol{C_{m\_calculé}}$ par le couple de consigne du calculateur $C_{m\_consigne}$ dans le calcul du facteur de correction $F_{corr}$, présente également un grand intérêt. En effet, on est ainsi certain que le facteur correctif se fonde sur l'exacte valeur de la consigne appliquée par le calculateur de contrôle moteur.

Enfin, il faut noter la disposition particulière introduite par l'invention dans le calcul du facteur de correction $F_{corr}$, qui est issu désormais de la moyenne temporelle du ratio de perte de couple instantané. En effet, le calcul de cette moyenne peut n'être activé que lorsque le couple de consigne appliqué par le moteur est supérieur à la limite de sa plage atmosphérique, afin d'obtenir le facteur correctif final. Cette amélioration vise à obtenir une estimation plus précise du ratio couple réel / couple théorique qui sera observé lors de la demande de relance.

Comme indiqué plus haut, le ratio instantané couple réel / couple théorique observé lorsque la pédale est relâchée, n'est pas représentatif du ratio qui sera observé lorsque le conducteur aura enfoncé la pédale pour relancer le véhicule. Ce qui peut conduire à une large surestimation de l'accélération atteignable lors de la demande de relance.

Une manière de mieux estimer le ratio de perte de couple après la demande de relance, est donc de faire une moyenne temporelle du ratio observé lors des précédentes demandes de relance. Le filtrage de premier ordre est la manière la plus efficace de réaliser cette moyenne temporelle.

Enfin, le calcul de la moyenne n'est activé que si le couple de consigne appliqué par le moteur est supérieur à un seuil fixe, représentatif de la limite de la plage atmosphérique. Le facteur correctif moyen n'est ainsi calculé que lorsque le conducteur effectue une demande de relance, et ne prend en compte que les situations dans lesquelles le temps de réponse du turbo intervient.

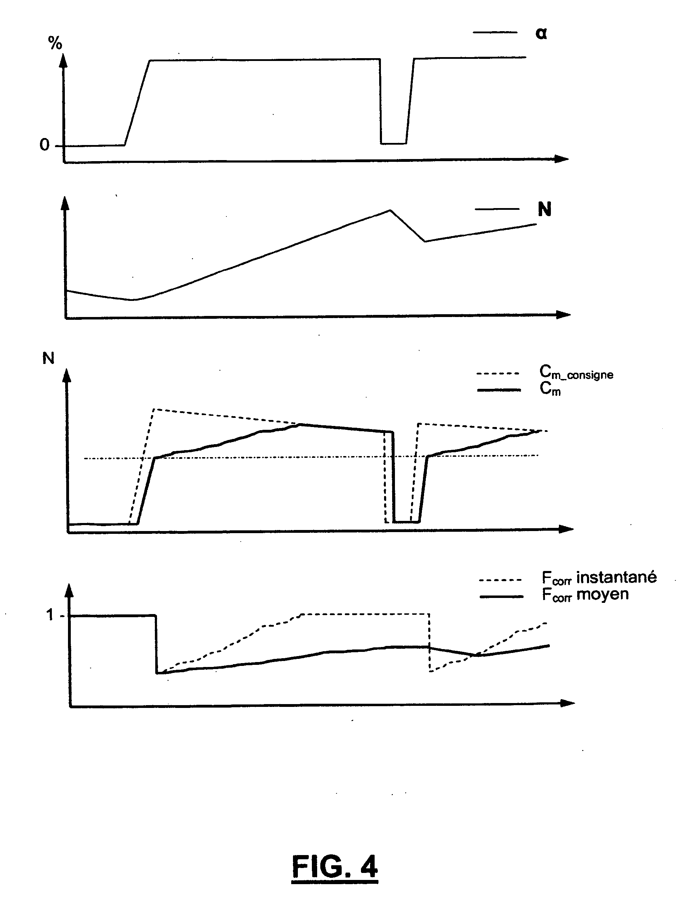

La figure 4 illustre cette troisième amélioration : on constate que le facteur de correction moyen, issu des précédentes demandes de relance, est une meilleure estimation du ratio de perte de couple qui est observé lors de la demande de relance, que le facteur de correction instantané en levé de pied. Au final, la surestimation de l'accélération atteignable lors de la demande de relance est moindre.

## Revendications

1. Procédé d'anticipation des rétrogradages en montée sur un véhicule équipé d'une transmission automatique disposant par ailleurs de lois de passage lui imposant des passages sur le rapport inférieur en fonction de courbes de rétrogradage préétablies, **caractérisé en ce que** le passage sur le rapport inférieur (R-1) est imposé à la transmission indépendamment de la consigne de rapport établie par les lois de passage, lorsque l'accélération atteignable au couple maximal $a_{est}$ (Cm_max) sur le rapport courant (R) est inférieure au seuil d'accélération nécessaire au maintien de la vitesse du véhicule.

2. Procédé d'anticipation selon la revendication 1, **caractérisé en ce que** l'accélération atteignable $a_{est}$ (C$_{m\_max}$) est estimée par calcul de la différence entre le couple à la roue correspondant au couple moteur maximal $C_r\,(C_{m\_max})$ atteignable sur le rapport courant lors d'une demande de relance par enfoncement de la pédale, et le couple appliqué à la roue correspondant au couple moteur courant $C_r(C_m)$.

3. Procédé d'anticipation selon la revendication 2, **caractérisé en ce que** l'accélération atteignable au couple maximal est estimée par une relation du type :

$$a_{est}(C_{m\_\max}) = a_{mes} + \frac{1}{M}\frac{C_r(C_{m\_\max}) - C_r(C_m)}{r} \, ,$$

dans laquelle,
$a_{mes}$ est accélération mesurée du véhicule, $M$ est la masse du véhicule, et r est le rayon des pneus du véhicule.

4. Procédé d'anticipation selon la revendication 2 ou 3, **caractérisé en ce que** le couple à la roue correspondant au couple moteur maximal C$_r$ (Cm_max) est lié au couple maximal théorique du moteur sur le régime courant par un facteur de correction ($F_{corr}$).

5. Procédé d'anticipation selon la revendication 3, **caractérisé en ce que** le facteur de correction (F$_{corr}$) est fonction du rapport entre une estimation du couple moteur par son calculateur, et la consigne de couple appliquée par le calculateur du moteur.

6. Procédé d'anticipation selon la revendication 4, **caractérisé en ce que** le facteur de correction ($F_{corr}$) est une moyenne des valeurs de ce rapport calculées lors des précédentes demandes de relance du véhicule par le conducteur.

7. Procédé d'anticipation selon la revendication 6, **caractérisé en ce que** le calcul de la moyenne n'est activé que si le couple de consigne appliqué par le moteur est supérieur à un seuil fixe représentatif de la limite de la plage atmosphérique du moteur.

8. Procédé de contrôle des changements de rapports sur une transmission automatique disposant de lois de passage imposant une consigne de rapport (R) selon des lois de passage préétablies, **caractérisé en ce que** les rétrogradages sont déclenchés d'une part par application des lois de passage de la transmission, et d'autre part par anticipation conformément à l'une des revendications précédentes.

9. Procédé de contrôle selon la revendication 8, **caractérisé en ce que** les passages montants sur le rapport immédiatement supérieur sont interdits lorsque l'accélération atteignable sur le rapport supérieur est inférieure à un premier seuil d'accélération, et que la pente est aussi supérieure à un seuil.

10. Procédé de contrôle selon la revendication 9 **caractérisé en ce que** les passages montants sur le rapport immédiatement supérieur sont autorisés à nouveau lorsque l'accélération atteignable sur le rapport supérieur devient supérieure à un deuxième seuil d'accélération plus grand que le premier seuil, ou si la pente devient inférieure à un deuxième seuil de pente inférieur au premier.

11. Procédé de contrôle selon la revendication 8, **caractérisé en ce que** les passages montants sur le rapport immédiatement supérieur sont déclenchés par anticipation conformément à la revendication 9 ou 10.

**Patentansprüche**

1. Verfahren zur Antizipation der Rückschaltvorgänge an einer Steigung bei einem mit einem Automatikgetriebe ausgestatteten Fahrzeug, das außerdem über Schaltgesetze verfügt, die ihm das Schalten in den niedrigeren Gang abhängig von vorab erstellten Rückschaltkurven aufzwingen, **dadurch gekennzeichnet, dass** das Schalten in den niedrigeren Gang (R-1) dem Getriebe unabhängig vom durch die Schaltgesetze erstellten Gangsollwert aufgezwungen wird, wenn die mit dem maximalen Drehmoment $a_{est}$ ($C_{m\_max}$) beim laufenden Gang (R) erreichbare Beschleunigung niedriger als die für die Aufrechterhaltung der Geschwindigkeit des Fahrzeugs notwendige Beschleunigungsschwelle ist.

2. Antizipationsverfahren nach Anspruch 1, **dadurch gekennzeichnet, dass** die erreichbare Beschleunigung $a_{est}$ ($C_{m\_max}$) durch Berechnung der Differenz zwischen dem Raddrehmoment entsprechend dem maximalen Motordrehmoment $C_r$ ($C_{m\_max}$), das im laufenden Gang bei einer Wiederanlassforderung durch Eindrücken des Pedals erreicht werden kann, und dem an das Rad angewendeten Drehmoment entsprechend dem laufenden Motordrehmoment $C_r$ ($C_m$) geschätzt wird.

3. Antizipationsverfahren nach Anspruch 2, **dadurch gekennzeichnet, dass** die beim maximalen Drehmoment erreichbare Beschleunigung durch eine Beziehung der folgenden Art geschätzt wird:

$$a_{est}\left(C_{m\_\max}\right) = a_{mes} + \frac{1}{M}\frac{C_r\left(C_{m\_\max}\right) - C_r\left(C_m\right)}{r},$$

in der
$a_{mes}$ die gemessene Beschleunigung des Fahrzeugs ist, M die Masse des Fahrzeugs ist, und r der Radius der Luftreifen des Fahrzeugs ist.

**4.** Antizipationsverfahren nach Anspruch 2 oder 3, **dadurch gekennzeichnet, dass** das Raddrehmoment entsprechend dem maximalen Motordrehmoment $C_r(C_{m\_max})$ mit dem theoretischen maximalen Drehmoment des Motors bei der laufenden Drehzahl durch einen Korrekturfaktor ($F_{corr}$) verbunden ist.

**5.** Antizipationsverfahren nach Anspruch 3, **dadurch gekennzeichnet, dass** der Korrekturfaktor ($F_{corr}$) vom Verhältnis zwischen einer Schätzung des Motordrehmoments durch seinen Rechner und dem vom Rechner des Motors angewendeten Drehmomentsollwert abhängt.

**6.** Antizipationsverfahren nach Anspruch 4, **dadurch gekennzeichnet, dass** der Korrekturfaktor ($F_{corr}$) ein Mittelwert der Werte dieses Verhältnisses ist, die bei vorhergehenden Wiederanlassforderungen des Fahrzeugs durch den Fahrer berechnet wurden.

**7.** Antizipationsverfahren nach Anspruch 6, **dadurch gekennzeichnet, dass** die Berechnung des Mittelwerts nur aktiviert wird, wenn das vom Motor angewendete Solldrehmoment höher als eine festgesetzte Schwelle ist, die für die Grenze des Saugbereichs des Motors repräsentativ ist.

**8.** Verfahren zur Kontrolle der Gangwechsel bei einem Automatikgetriebe, das über Schaltgesetze verfügt, die einen Gangsollwert (R) gemäß vorab erstellten Schaltgesetzen aufzwingen, **dadurch gekennzeichnet, dass** die Rückschaltungen einerseits durch Anwendung der Schaltgesetze des Getriebes und andererseits durch Antizipation nach einem der vorhergehenden Ansprüche ausgelöst werden.

**9.** Kontrollverfahren nach Anspruch 8, **dadurch gekennzeichnet, dass** die Hochschaltungen in den direkt höheren Gang verboten sind, wenn die im höheren Gang erreichbare Beschleunigung niedriger als eine erste Beschleunigungsschwelle und die Steigung auch höher als eine Schwelle ist.

**10.** Kontrollverfahren nach Anspruch 9, **dadurch gekennzeichnet, dass** die Hochschaltungen in den direkt höheren Gang erneut erlaubt sind, wenn die im höheren Gang erreichbare Beschleunigung höher als eine zweite Beschleunigungsschwelle größer als die erste Schwelle wird, oder wenn die Steigung niedriger als eine zweite Steigungsschwelle niedriger als die erste wird.

**11.** Kontrollverfahren nach Anspruch 8, **dadurch gekennzeichnet, dass** die Hochschaltungen in den direkt höheren Gang durch Antizipation nach Anspruch 9 oder 10 ausgelöst werden.

**Claims**

**1.** Method for anticipating downshifts when driving uphill on a vehicle equipped with an automatic transmission also having change laws imposing on it changes to the lower gear based on preestablished downshift curves, **characterized in that** the change to the lower gear (R-1) is imposed on the transmission independently of the gear set point established by the change laws, when the acceleration that can be reached at the maximum torque $a_{est}$ ($C_{m\_max}$) on the current gear (R) is less than the acceleration threshold needed to maintain the speed of the vehicle.

**2.** Anticipation method according to Claim 1, **characterized in that** the acceleration that can be reached $a_{est}$ ($C_{m\_max}$) is estimated by calculating the difference between the torque on the wheel corresponding to the maximum engine torque $C_{r\ (Cm\_max)}$ that can be reached on the current gear upon a boost request by depression of the pedal, and the torque applied to the wheel corresponding to the current engine torque $C_r\ (C_m)$.

**3.** Anticipation method according to Claim 2, **characterized in that** the acceleration that can be reached at the maximum torque is estimated by a relationship of the type:

$$a_{est}\left(C_{m\_max}\right) = a_{mes} + \frac{1}{M}\frac{C_r(C_{m\_max}) - C_r(C_m)}{r},$$

in which,
$a_{mes}$ is the measured acceleration of the vehicle, $M$ is the weight of the vehicle, and r is the radius of the tires of the vehicle.

4. Anticipation method according to Claim 2 or 3, **characterized in that** the torque on the wheel corresponding to the maximum engine torque $C_r$ ($C_{m\_max}$) is linked to the theoretical maximum torque of the engine on the current speed by a correction factor $(F_{corr})$.

5. Anticipation method according to Claim 3, **characterized in that** the correction factor $(F_{corr})$ is a function of the ratio between an estimation of the engine torque by its computer, and the torque set point applied by the engine's computer.

6. Anticipation method according to Claim 4, **characterized in that** the correction factor $(F_{corr})$ is an average of the values of this ratio which are calculated on preceding vehicle boost requests by the driver.

7. Anticipation method according to Claim 6, **characterized in that** the calculation of the average is activated only if the set point torque applied by the engine is greater than a fixed threshold representative of the limit of the atmospheric range of the engine.

8. Method for monitoring gear changes on an automatic transmission having change laws imposing a gear set point (R) according to preestablished change laws, **characterized in that** the downshifts are triggered on the one hand by application of the transmission change laws, and on the other hand by anticipation in accordance with one of the preceding claims.

9. Monitoring method according to Claim 8, **characterized in that** the upshifts to the immediately higher gear are prohibited when the acceleration that can be reached on the higher gear is less than a first acceleration threshold, and the slope is also greater than a threshold.

10. Monitoring method according to Claim 9, **characterized in that** the upshifts to the immediately higher gear are once again allowed when the acceleration that can be reached on the higher gear becomes greater than a second acceleration threshold greater than the first threshold, or if the slope becomes less than a second slope threshold less than the first.

11. Monitoring method according to Claim 8, **characterized in that** the upshifts to the immediately higher gear are triggered by anticipation in accordance with Claim 9 or 10.

**FIG.1**

**FIG. 2**

**FIG.3**

**FIG. 4**

**RÉFÉRENCES CITÉES DANS LA DESCRIPTION**

**Documents brevets cités dans la description**

- FR 2842579

- FR 2737761